# EUROPÄISCHE PATENTSCHRIFT

(11) **EP 2 052 138 B1**
(45) Veröffentlichungstag und Bekanntmachung des Hinweises auf die Patenterteilung: **14.12.2011**
(21) Anmeldenummer: 07786635.8
(22) Anmeldetag: 09.08.2007
(51) Int. Cl.: F01P 7/08, F01P 7/04, F16D 35/02, F04D 25/02

(54) **LÜFTERANTRIEBSVORRICHTUNG UND LÜFTER MIT DERSELBEN**
FAN DRIVE DEVICE AND FAN HAVING THE SAME
DISPOSITIF D'ENTRAÎNEMENT DE VENTILATEUR ET VENTILATEUR ÉQUIPÉ DE CE DISPOSITIF

(30) Priorität: 10.08.2006 DE 102006037639
(43) Veröffentlichungstag der Anmeldung: 29.04.2009
(73) Patentinhaber: Behr GmbH & Co. KG, 70469 Stuttgart (DE)
(72) Erfinder: KLEIN, Kurt, 71665 Vaihingen (DE); STOKLOSSA, Rudolf, 75417 Mühlacker (DE); SCHULTHEISS, Gerold, 75173 Pforzheim (DE)
(86) Internationale Anmeldenummer: PCT/EP2007/007046
(87) Internationale Veröffentlichungsnummer: WO 2008/017479

(56) Entgegenhaltungen:
- EP-A1- 0 936 371
- WO-A-2007/096071
- DE-C1- 19 618 630

## Beschreibung

Die vorliegende Erfindung betrifft eine Lüfterantriebsvorrichtung zum Antrieb zumindest eines ersten Lüfterrades nach Anspruch 1 sowie einen Lüfter mit einer Lüfterantriebsvorrichtung.

Zur Kühlung von Wärmetauschern wie Kühlmittelkühlern, Ladeluftkühlern, Ölkühlern, Kondensatoren für Klimaanlagen, Gaskühlern für Klimaanlagen usw. sind Lüfter bekannt. Diese Lüfter werden mittels zumindest einer elektrischen Antriebseinheit oder mittels zumindest einer Flüssigkeitsreibungskupplung angetrieben.

Die Lüfter dienen insbesondere zur Motorkühlung von Kraftfahrzeugen mit Brennkraftmaschinen.

Bekannt sind Kupplungsvorrichtungen, die nach dem Prinzip der trockenen Reibung ein Ein- und Auskuppeln ermöglichen. Diese Kupplungsvorrichtungen können pneumatisch oder elektromagnetisch betätigt werden. Diese Kupplungsvorrichtungen weisen zumeist eine Riemenscheibe auf, mit der ein Riemenantrieb antreibbar ist. Die Lagerung der antreibbaren Riemenscheibe weist zumeist einen nicht rotierenden Lagerzapfen auf. Ferner weist die Kupplungsvorrichtung zumeist pneumatische oder elektromagnetische Betätigungsvorrichtungen auf. Zumeist wird bei der Montage die Kupplungsvorrichtung zunächst ohne Lüfter, insbesondere Lüfterrad, an einer Motorstirnwand befestigt und mit dem Riementrieb verbunden. Anschließend wird der Lüfter, insbesondere das Lüfterrad, montiert.

Die zuvor genannten Kupplungsvorrichtungen weisen keine stufenlose Regelung der Abtriebsdrehzahl auf. Der Lüfter wird entweder kraftschlüssig direkt mitgenommen oder er verbleibt über das Restschleppmoment der Lagerung in einer sehr geringen Leerlaufdrehzahl. Anforderungen wie eine höhere Lüfterleistung, geringere Geräuschbildung sowie bessere Energieausnutzung sind mit den beschriebenen Lüftern nicht möglich.

Falls also die geringe Leerlaufdrehzahl im Betrieb nicht ausreichend sein sollte, erfolgt die maximale Zuschaltung des Lüfters. Dies verbraucht sehr viel Energie und führt zu einer Geräuschbildung, was den Fahrkomfort eines Fahrzeuginsassen unter Umständen beeinträchtigen kann.

Ferner sind kontinuierlich regelnde Lüfterantriebsvorrichtungen nach dem Prinzip der Flüssigkeitsreibung bekannt. Vor der Montage werden diese Lüfterantriebsvorrichtungen mit dem Lüfter verbunden. Das Fahrzeug weist zumeist eine Lagereinheit auf, die insbesondere an der Motorstirnwand vormontiert ist.

Neben der Ansteuerung von Flüssigkeitsreibungskupplungen mittels Bimetall sind elektromagnetisch ansteuerbare Flüssigkeitsreibungskupplungen bekannt. Hierbei wird eine nicht rotierende Magnetspule verwendet. Diese nicht rotierende Magnetspule erfordert ein zusätzliches Lager im Vergleich zu einer mittels Bimetall angesteuerten Flüssigkeitsreibungskupplung. Ferner ist eine Abstützung des elektrischen Anschlusses im Bereich von rotierenden Bauteilen erforderlich.

Lüfterantriebsvorrichtungen, die nach dem Flüssigkeitsreibungsprinzip funktionieren, weisen eine Schlupfleistung auf, die Wärme erzeugt. Die Wärme führt zur Erhitzung der Kupplungsbauteile. Die erzeugte Schlupfleistung ist proportional dem übertragenen Drehmoment und proportional der Differenz zwischen Antriebsdrehzahl und Abtriebsdrehzahl. Die Lüfterantriebsvorrichtung, insbesondere die Flüssigkeitsreibungskupplung, weist Bauteile auf, die eine bestimmte Temperatur nicht überschreiten dürfen. Diese Bauteile sind beispielsweise Lager, insbesondere Wälzlager. Ferner darf auch das viskose Fluid, welches das Drehmoment überträgt, bestimmte Temperaturen nicht überschreiten. Zur Ableitung der erzeugten Wärme aus der Kupplung ist das Gehäuse der Kupplung zumeist mit Kühlrippen versehen, welche die Wärmeübertragung an die umgebende Luft verbessern sollen.

Bekannt sind Lüfterantriebsvorrichtungen, bei denen das Kupplungsgehäuse einer Flüssigkeitsreibungskupplung mit der Drehzahl des Lüfters, insbesondere des Lüfterrades, rotiert. Die Drehzahl des Lüfters, insbesondere des Lüfterrades, ist kleiner als die Antriebsdrehzahl. Beim Drehen des Kupplungsgehäuses erfolgt aufgrund der Fliehkraft eine erzwungene Konvektion, die mit dem Quadrat der Drehzahl des Kupplungsgehäuses steigt. Bei einem geringen Zuschaltgrad des Lüfters, d. h. bei kleiner Antriebsdrehzahl, ist die Kühlung des Kupplungsgehäuses relativ gering. Bei Zuschaltgraden von 30% bis 70% wird besonders viel Wärme erzeugt. Das größte Defizit in der Wärmebilanz liegt zumeist im Bereich von 30% bis 40% Zuschaltung des Lüfters, da die abgeführte Wärmeleistung hierbei am geringsten ist.

Aus der DE 10324314 A1 der Anmelderin ist ein Lüfterantrieb für Kraftfahrzeuge bekannt. Der Lüfterantrieb weist Mittel zur Erhöhung der Lüfterdrehzahl auf, wobei der Lüfter koaxial zur Kurbelwelle des Verbrennungsmotors und achsparallel zur Kurbelwelle Nebenaggregate aufweist, die über einen gemeinsamen ersten Riemenantrieb mit einer Übersetzung ins Schnelle vom Verbrennungsmotor antreibbar sind, wobei der Lüfter über einen ersten Antriebsstrang, in den die Flüssigkeitsreibungskupplung, bestehend aus Antriebswelle, Antriebsscheibe und Gehäuse, sowie ein Freilauf geschaltet sind, direkt von der Kurbelwelle und alternativ - zur Erhöhung der Lüfterdrehzahl - über einen zweiten Antriebsstrang antreibbar ist, der einen zweiten Riementrieb von einem Nebenaggregat auf die Flüssigkeitsreibungskupplung umfasst und über eine Schaltkupplung zu- oder abschaltbar ist. Der Lüfter kann einerseits mit der Motordrehzahl über einen ersten Antriebsstrang angetrieben werden und andererseits mit erhöhter Drehzahl über einen zweiten Antriebsstrang angetrieben werden. Letzteres geht aus von einem Nebenaggregat, z. B. der Kühlermittelpumpe, die mit höherer Drehzahl als die Kurbelwelle läuft.

Aus der DE 10100064 A1 der Anmelderin ist ein Lüfter mit Axialschaufeln bekannt. Die Axialschaufeln sind auf einer Lüfternabe befestigt. Im Bereich der Nabe und im Wesentlichen auf der Saugseite der Axialschaufeln sind Luftleitelemente angeordnet, wobei die Luftleitelemente als flossenartige Stabilisatoren ausgebildet sind, die sich in Umfangsrichtung nur über einen Bereich von 1 % bis 40 % der Schaufelteilung erstrecken. Die Luftleitelemente belassen somit zwischen zwei Schaufeln und der Nabe einen offenen Strömungskanal, bei welchem die Nabenströmung und die Schaufelströmung kontrolliert geführt werden. Die Stabilisatoren im Schaufelwurzelbereich bewirken auf der Saugseite der Schaufeln eine Trennung von Naben- und Schaufelströmung und verhindern eine Ablösung der Strömung sowie eine schädliche Wirbelbildung.

Aus der unveröffentlichten DE 102006008576.0 der Anmelderin ist ferner eine Lüfterantriebsvorrichtung zum Antrieb mindestens eines Lüfterrades mit mindestens einem ersten antreibbaren kühlbaren Gehäuseelements mit zumindest einer Abtriebsscheibe, die mit dem mindestens einen antreibbaren kühlbaren Gehäuseelement fluidreibend drehmomentübertragbar verbindbar ist bekannt, wobei zumindest ein Drehmomentübertragungsraum mit mindestens einem Fluid beströmbar ist, dessen Massenstrom mittels eines Ventilelements regelbar ist, wobei das Ventilelement mit zumindest einem Aktuator betätigbar ist und der Aktuator zumindest abschnittsweise in mindestens einem Halteelement zur Befestigung an einer Motoreinheit angeordnet ist.

Weitere Lüfterantriebsvorrichtungen sind aus EP 0 936 371 A und DE 19 618 630 bekannt.

Es ist Aufgabe der vorliegenden Erfindung, eine Lüfterantriebsvorrichtung der eingangs genannten Art zu verbessern, insbesondere eine Lüfterantriebsvorrichtung mit einer höheren Leistung zu entwickeln und dabei die Verlustleistung, insbesondere die entstehende Reibungswärme, aus den Bauteilen, insbesondere aus zumindest einem Gehäuse abzuleiten, so dass ein Arbeitsmedium, insbesondere Viskoöl, nicht überhitzt wird.

Die Aufgabe wird durch die Merkmale des Anspruchs 1 gelöst.

Es wird eine Lüfterantriebsvorrichtung zum Antrieb zumindest eines ersten Lüfterrades vorgeschlagen, wobei die Lüfterantriebsvorrichtung zumindest eine antreibbare Antriebsscheibe, zumindest ein erstes kühlbares Gehäuseelement zum Antrieb des ersten Lüfterrades aufweist, wobei das zumindest eine erste Gehäuseelement mit der zumindest einen Antriebsscheibe fluidreibend drehmomentübertragbar verbindbar ist, wobei zumindest ein Drehmomentübertragungsraum mit zumindest einem Fluid beströmbar ist, wobei zumindest eine Temperierungsvorrichtung zur Kühlung des zumindest einen ersten Gehäuseelements vorgesehen ist.

Die zumindest eine antreibbare Antriebsscheibe kann insbesondere von einer Motoreinheit eines Verbrennungsmotors angetrieben werden bzw. wird mittels einer Motoreinheit eines Verbrennungsmotors eines Kraftfahrzeugs angetrieben. Das zumindest eine erste kühlbare Gehäuseelement zum Antrieb des ersten Lüfterrades ist mit der zumindest einen Antriebsscheibe fluidreibend drehmomentübertragbar verbindbar, d. h. das zumindest eine erste Gehäuseelement ist antreibbar bzw. kann angetrieben werden bzw. wird angetrieben. Ferner ist das zumindest eine erste Gehäuseelement kühlbar bzw. kann gekühlt werden bzw. wird gekühlt.

Unter fluidreibend drehmomentübertragbar ist dabei zu verstehen, dass aufgrund von Reibungskräften, die Zwischenteilchen eines Fluids wirken, zumindest ein Drehmoment zwischen der zumindest einen antreibbaren Antriebsscheibe und dem zumindest einen ersten kühlbaren Gehäuseelement übertragbar ist bzw. übertragen werden kann bzw. übertragen wird.

Der zumindest eine Drehmomentübertragungsraum ist mit zumindest einem Fluid beströmbar.

Unter Drehmomentübertragungsraum ist insbesondere ein Raum zu verstehen, der in zumindest einem ersten Gehäuseelement ausgebildet ist. In diesem Raum kann die Übertragung des Drehmoment von der zumindest einen antreibbaren Antriebsscheibe auf das zumindest eine erste Gehäuseelement, insbesondere fluidreibend, erfolgen. Der zumindest eine Drehmomentübertragungsraum ist mit zumindest einem Fluid, insbesondere einem viskosen Fluid, beströmbar. Das Fluid kann insbesondere in den Drehmomentübertragungsraum einströmen. Insbesondere kann das zumindest eine Fluid auch aus dem Drehmomentübertragungsraum wieder abströmen.

Die Temperierungsvorrichtung, die als zumindest ein zweites Lüfterrad ausgebildet ist, dient dazu, das zumindest eine erste Gehäuseelement zu Kühlen. Eine Temperierungsvorrichtung, insbesondere zumindest ein zweites Lüfterrad, kann dabei zumindest eine Luftströmung erzeugen, die insbesondere zumindest an dem einen ersten Gehäuseelement vorbeiströmt und auf diese Weise das zumindest eine erste Gehäuseelement kühlt.

Gemäß der Erfindung ist die zumindest eine Temperierungsvorrichtung als zumindest ein zweites Lüfterrad ausgebildet. Auf diese Weise kann ein zumindest ein erstes Gehäuseelement besonders vorteilhaft temperiert, insbesondere gekühlt, werden.

In einer vorteilhaften Ausgestaltung ist die Temperierungsvorrichtung benachbart zu dem ersten Gehäuseelement angeordnet. Auf diese Weise kann das erste Gehäuseelement durch das zweite Lüfterrad besonders vorteilhaft gekühlt werden.

Ferner ist vorgesehen, dass die Temperierungsvorrichtung in Strömungsrichtung vor dem zumindest einen Gehäuseelement angeordnet ist. Auf diese Weise kann das zweite Lüfterrad besonders vorteilhaft Luft ansaugen und mit dieser angesaugten Luft das zumindest eine erste Gehäuseelement besonders vorteilhaft kühlen, indem die Luft besonders vorteilhaft an dem zumindest einen ersten Gehäuseelement vorbeiströmt.

In einer vorteilhaften Weiterbildung ist die Temperierungsvorrichtung im Wesentlichen konzentrisch zu dem zumindest einen ersten Gehäuseelement angeordnet. Auf diese Weise kann das zumindest eine erste Gehäuseelement überall im Wesentlichen gleichmäßig mit Luft umströmt und auf diese Weise besonders vorteilhaft gekühlt werden.

Ferner kann vorgesehen sein, dass die Temperierungsvorrichtung ringlüfterartig ausgebildet ist. Auf diese Weise kann das zumindest eine erste Gehäuseelement besonders vorteilhaft gekühlt werden.

In einer vorteilhaften Ausgestaltung ist die Temperierungsvorrichtung axiallüfterradartig ausgebildet. Auf diese Weise kann der Luftstrom und insbesondere der Wirkungsgrad des ersten Lüfterrades besonders vorteilhaft verbessert werden.

Ferner kann vorgesehen werden, dass die Temperierungsvorrichtung radiallüfterradartig ausgebildet ist. Auf diese Weise kann Luft zum Kühlen des zumindest einen ersten Gehäuseelements besonders vorteilhaft auf die Druckseite des ersten Lüfterrades strömen, wodurch der Wirkungsgrad des ersten Lüfterrades besonders vorteilhaft verbessert werden kann.

Ferner kann vorgesehen sein, dass die Temperierungsvorrichtung mit einer Antriebswelle einer Motoreinheit fest, insbesondere drehfest, verbunden ist. Auf diese Weise kann das zweite Lüfterrad besonders vorteilhaft mit derselben Drehzahl der antreibenden Motoreinheit rotieren, die insbesondere schneller sein kann als die Drehzahl des zumindest einen ersten Gehäuseelements.

In einer vorteilhaften Ausführung nimmt ein Quotient Q, der sich aus einem Lüfterraddurchmesser des zweiten Lüfterrades DLR dividiert durch einen Durchmesser des ersten Gehäuseelements DGE berechnet Werte zwischen 1/20 und 20, insbesondere Werte zwischen 1/10 und 10, an.

Weiterhin kann besonders bevorzugt vorgesehen werden, dass der Drehmomentübertragungsraum mit einem viskosen Fluid durch zumindest eine Bohrung beströmbar ist. Auf diese Weise kann das Drehmoment von der zumindest einen Antriebsscheibe auf das zumindest eine erste kühlbare Gehäuseelement besonders vorteilhaft übertragen werden.

Ferner kann vorgesehen sein, dass das zumindest eine erste Gehäuseelement und/oder das zumindest eine zweite Gehäuseelement erste konzentrische labyrinthförmige Aussparungen aufweisen und die Antriebsscheibe zweite dazu korrespondierende konzentrische labyrinthförmige Aussparungen aufweist. Auf diese Weise kann die Fläche des Drehmomentübertragungsraums besonders vorteilhaft erhöht werden, wobei das zumindest eine Drehmoment von der zumindest einen Antriebsscheibe besonders vorteilhaft auf das zumindest eine erste Gehäuseelement und damit auf das zumindest eine erste Lüfterrad übertragen werden kann.

In einer vorteilhaften Weiterbildung sind das zumindest eine erste Gehäuseelement und /oder das zumindest eine zweite Gehäuseelement fest, insbesondere drehfest, mit dem zumindest einen ersten Lüfterrad verbunden. Auf diese Weise kann besonders vorteilhaft die Drehzahl des zumindest einen ersten Gehäuseelements und/oder des zumindest einen zweiten Gehäuseelements auf das zumindest eine erste Lüfterrad übertragen werden.

Ferner kann vorgesehen sein, dass das zumindest eine erste Gehäuseelement und/oder das zumindest eine zweite Gehäuseelement Kühlrippen, insbesondere radial angeordnete Kühlrippen, aufweisen. Auf diese Weise kann die Wärme des zumindest einen ersten Gehäuseelements und/oder des zumindest einen zweiten Gehäuseelements besonders vorteilhaft an die Luft abgeführt werden.

In einer weiteren Ausgestaltung weist die Lüfterantriebsvorrichtung zumindest ein erstes haubenartig ausgebildetes Strömungsleitelement zur Kühlung des zumindest einen ersten Gehäuseelements und/oder des zumindest einen zweiten Gehäuseelements auf. Auf diese Weise kann insbesondere durch das zweite Lüfterrad angesaugte Luft besonders vorteilhaft an dem zumindest einen ersten Gehäuseelement und/oder an dem zumindest einen zweiten Gehäuseelement vorbeiströmen und das zumindest eine erste Gehäuseelement und/oder das zumindest eine zweite Gehäuseelement besonders vorteilhaft kühlen.

In einer Weiterbildung ist vorgesehen, dass zumindest ein Lüfterflanschblech zur Verbindung des zumindest einen ersten Lüfterrades mit dem zumindest einen ersten Gehäuseelement und/oder mit dem zumindest einen zweiten Gehäuseelement vorgesehen ist.

Ferner kann vorgesehen sein, dass das zumindest eine Lüfterflanschblech zumindest eine Luftableitungsöffnung zur Luftableitung aufweist. Auf diese Weise kann das zumindest eine erste Gehäuseelement und/oder das zumindest eine zweite Gehäuseelement besonders vorteilhaft mit Luft gekühlt werden, wobei die Luft anschließend besonders vorteilhaft auf die Druckseite des Lüfters, insbesondere des zumindest einen ersten Lüfterrades, abgeführt werden kann.

In einer Weiterbildung ist zumindest ein zweites flügelartig ausgebildetes Strömungsleitelement vorgesehen. Auf diese Weise kann die Luft zur Kühlung des zumindest einen ersten Gehäuseelements und/oder des zumindest einen zweiten Gehäuseelements besonders vorteilhaft auf die Druckseite des Lüfters, insbesondere des ersten Lüfterrades, geführt werden.

In einer weiteren vorteilhaften Ausführung ist das zumindest eine zweite Strömungselement mit zumindest einem Flügel des zumindest einen ersten Lüfterrads verbunden oder mit dem zumindest einen Flügel einteilig ausgebildet. Auf diese Weise wird die Luft zur Kühlung des zumindest einen ersten Gehäuseelements und/oder des zumindest einen zweiten Gehäuseelements besonders vorteilhaft auf die Druckseite des zumindest einen ersten Lüfterrades geleitet, ohne dass die anströmende Luft radial nach außen abgelenkt wird.

Weiterhin kann besonders bevorzugt vorgesehen werden, dass zumindest ein Abdeckelement zur Kanalisierung zumindest eines Luftströmungsverlaufs an dem zumindest einen ersten Gehäuseelement und/oder an dem zumindest einen zweiten Gehäuseelement angeordnet ist. Auf diese Weise kann besonders vorteilhaft die angesaugte Luft in Rotation versetzt werden, wobei die Luft infolge der Fliehkraft besonders vorteilhaft nach außen hin abgelenkt wird und besonders vorteilhaft ein Sog entsteht.

Weiterhin kann besonders bevorzugt vorgesehen werden, dass zumindest ein reifenartig ausgebildetes Nabenelement vorgesehen ist, an dem zumindest eine Rippe, insbesondere mehrere Rippen, zur Luftströmungsbeeinflussung angeordnet ist.

Ferner wird ein Lüfter mit einer Lüfterantriebsvorrichtung nach einem der Ansprüche 1 bis 13 für zumindest einen Wärmetauscher für ein Kraftfahrzeug vorgeschlagen. Der Lüfter kann insbesondere der Durchströmung des zumindest einen Wärmetauschers für ein Kraftfahrzeug mit einem Kühlmedium, insbesondere mit Luft, dienen. Der Wärmetauscher kann ein Kühlmittelkühler und/oder ein Ladeluftkühler und/oder ein Abgaskühler und/oder ein Ölkühler und/oder ein Kondensator für eine Klimaanlage und/oder ein Gaskühler für eine Klimaanlage und/oder ein Kühler zur Elektronikkühlung eines Computers sein.

Vorteilhaft ist, dass die Lüfterantriebsvorrichtung zumindest ein erstes haubenartig ausgebildetes Strömungsleitelement zur Kühlung des zumindest einen ersten Gehäuseelements und/oder des zumindest einen zweiten Gehäuseelements aufweist.

Vorteilhaft ist, dass zumindest ein Lüfterflanschblech zur Verbindung des zumindest einen ersten Lüfterrades mit dem zumindest einen ersten Gehäuseelement und/oder mit dem zumindest einen zweiten Gehäuseelement vorgesehen ist.

Vorteilhaft ist, dass das zumindest eine Lüfterflanschblech zumindest eine Luftableitungsöffnung zur Luftableitung aufweist.

Vorteilhaft ist, dass zumindest ein zweites flügelartig ausgebildetes Strömungsleitelement vorgesehen ist.

Vorteilhaft ist, dass das zumindest eine zweite Strömungsleitelement mit zumindest einem Flügel (6, 36) des zumindest einen ersten Lüfterrades verbunden oder einteilig ausgebildet ist.

Vorteilhaft ist, dass zumindest ein Abdeckelement zur Kanalisierung zumindest eines Luftströmungsverlaufs an dem zumindest einen ersten Gehäuseelement und/oder an dem zumindest einen zweiten Gehäuseelement angeordnet ist.

Vorteilhaft ist, dass zumindest ein reifenartig ausgebildetes Nabenelement vorgesehen ist, an dem zumindest eine Rippe zur Luftströmungsbeeinflussung angeordnet ist.

Weitere vorteilhafte Ausgestaltungen der Erfindung ergeben sich aus den Unteransprüchen und aus der Zeichnung. Die Gegenstände der Unteransprüche beziehen sich sowohl auf die erfindungsgemäße Lüfterantriebsvorrichtung zum Antrieb zumindest eines ersten Lüfterrades als auch auf den erfindungsgemäßen Lüfter.

Ausführungsbeispiele der Erfindung sind in der Zeichnung dargestellt und werten im Folgenden näher erläutert, wobei eine Beschränkung der Erfindung hierdurch nicht erfolgen soll. Es zeigen
- Figur 1:: ein Schlupfleistungskennfeld,
- Figur 2:: eine isometrische Darstellung eines ersten Ausführungsbeispiels einer Lüfterantriebsvorrichtung,
- Figur 3:: eine Schnittdarstellung eines ersten Ausführungsbeispiels einer Lüfterantriebsvorrichtung,
- Figur 4:: eine weitere Schnittdarstellung A-A eines ersten Ausführungsbeispiels einer Lüfterantriebsvorrichtung,
- Figur 5:: eine Vorderansicht eines zweiten Ausführungsbeispiels einer Lüfterantriebsvorrichtung,
- Figur 6:: eine Schnittdarstellung B-B eines zweiten Ausführungsbeispiels einer Lüfterantriebsvorrichtung,
- Figur 7:: eine Vorderansicht eines dritten Ausführungsbeispiels einer Lüfterantriebsvorrichtung.
- Figur 8:: eine Schnittdarstellung C-C eines dritten Ausführungsbeispiels einer Lüfterantriebsvorrichtung
- Figur 9:: eine isometrische Darstellung eines dritten Ausführungsbeispiels einer Lüfterantriebsvorrichtung,
- Figur 10:: eine isometrische Darstellung eines vierten Ausführungsbeispiels einer Lüfterantriebsvorrichtung,
- Figur 11:: eine Schnittdarstellung D-D eines vierten Ausführungsbeispiels einer Lüfterantriebsvorrichtung,
- Figur 12:: eine Schnittdarstellung E-E eines fünften Ausführungsbeispiels einer Lüfterantriebsvorrichtung,
- Figur 13:: eine Vorderansicht eines fünften Ausführungsbeispiels einer Lüfterantriebsvorrichtung,
- Figur 14:: eine Rückansicht eines fünften Ausführungsbeispiels einer Lüfterantriebsvorrichtung,
- Figur 15:: eine Schnittdarstellung F-F eines fünften Ausführungsbeispiels einer Lüfterantriebsvorrichtung und
- Figur 16:: ein sechstes Ausführungsbeispiel einer Lüfterantriebsvorrichtung.

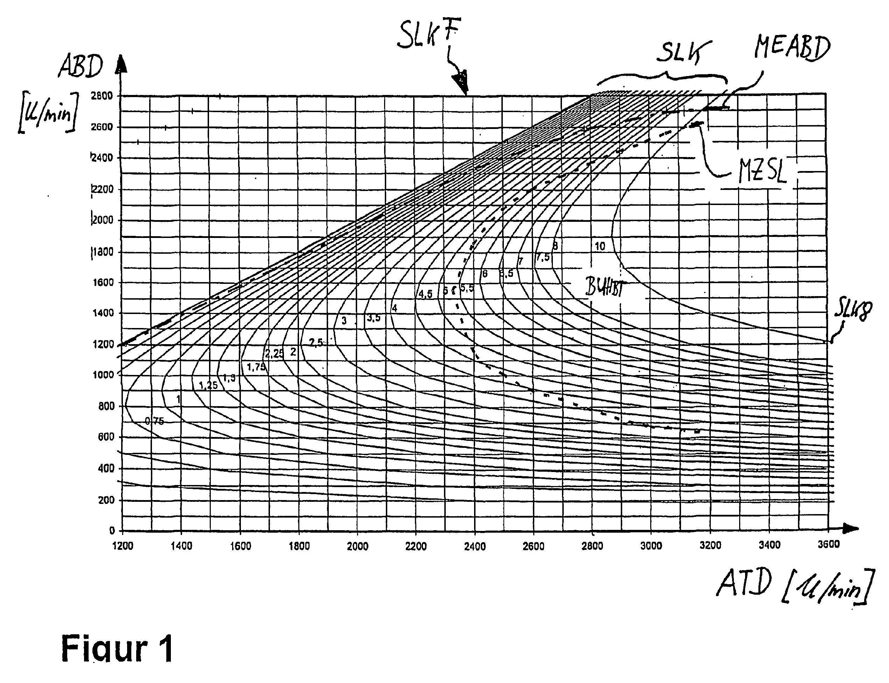

**Figur 1** zeigt ein Schlupfleistungskennfeld SLKF.

Im Schlupfleistungskennfeld SLKF ist die Abtriebsdrehzahl ABD in Umdrehungen pro Minuten (U/min) über der Antriebsdrehzahl ATD in Umdrehungen pro Minuten (U/min) aufgetragen. Im dargestellten Ausführungsbeispiel sind Antriebsdrehzahlen ATD von 1.200 bis 3.600 U/min und Abtriebsdrehzahlen ABD von 0 bis 2.800 U/min aufgetragen. Ferner sind Schlupfleistungskurven SLK unterschiedlicher Schlupfleistungen in Kilowatt (kW) im Schlupfleistungskennfeld SLKF eingetragen. Im dargestellten Ausführungsbeispiel sind die Schlupfleistungskurven für 0,75 kW; 1 kW; 1,25 kW; 1,5 kW; 1,75 kW; 2,25 kW; 2 kW; 2,5 kW; 3 kW; 3,5 kW; 4 kW; 4,5 kW; 5 kW; 5,5 kW; 6 kW; 6,5 kW; 7 kW; 7,5 kW; 8 kW und 10 kW eingetragen. Zwischenwerte zu diesen eingetragenen Kurven können durch Interpolation ermittelt werden. Exemplarisch ist die Schlupfleistungskurve für 8 kW mit SLK 8 bezeichnet.

Die Schlupfleistungen, die als Schlupfleistungskurven SLK im Schlupfleistungskennfeld SLKF eingetragen sind, entstehen im Betrieb der Lüfterantriebsvorrichtung aufgrund der Fluidreibung der zumindest einen nicht dargestellten Antriebsscheibe bei der Übertragung zumindest eines Drehmoments auf das zumindest eine erste Gehäuseelement. Die Schlupfleistung erzeugt Wärme, die aus der Lüfterantriebsvorrichtung abzuleiten ist. Wird diese Wärme nicht aus der Lüfterantriebsvorrichtung abgeleitet, entstehen unzulässig hohe Bauteiltemperaturen der Kupplung, insbesondere der Visco-Kupplung, die zum Totalausfall der Lüfterantriebseinheit führen bzw. führen können.

Die maximal erreichbare Abtriebsdrehzahl MEABD in U/min über der Antriebsdrehzahl ATD ist als Kurve dargestellt. Ebenso ist beispielhaft eine Begrenzungslinie der zulässigen Schlupfleistung MZSL für den stationären Betrieb dargestellt. Diese Begrenzungslinie beschreibt die ableitbaren Wärmeleistung bei einer gegebenen Gehäusedrehzahl, die üblicherweise der Abtriebsdrehzahl ABD entspricht. Der Bereich BUHBT, welcher nach links durch die maximal zulässige Schlupfleistungskurve MZSL begrenzt wird, führt zu unzulässig hohen Bauteiltemperaturen der Kupplung, insbesondere der Visco-Kupplung. Aus dem Schaubild ist abzulesen, dass bei Antriebsdrehzahlen ATD im Wesentlichen größer als 2.350 U/min Einschränkungen der zulässigen Abtriebsdrehzahlen ABD in Kauf genommen werden müssen.

Das zweite Lüfterrad weist einen Lüfterraddurchmesser DLR auf. Das erste Gehäuseelement weist einen Durchmesser DGE auf. Ein Quotient (Q) berechnet sich aus dem Lüfterraddurchmesser DLR des zweiten Lüfterrades dividiert durch den Durchmesser DGE des ersten Gehäuseelements. Der Quotient Q nimmt Werte zwischen 1/20 und 20, insbesondere Werte zwischen 1/10 und 10, an.

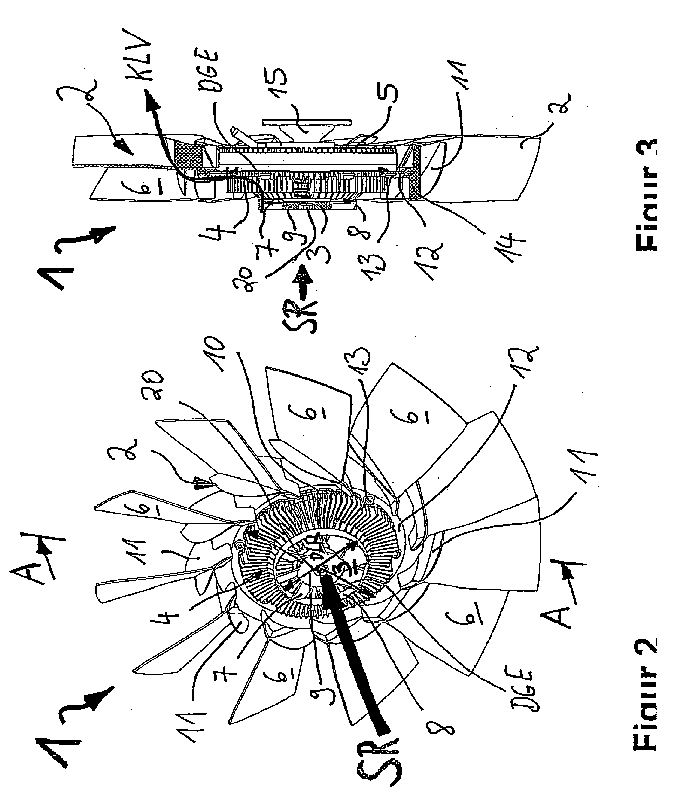

**Figur 2** zeigt eine isometrische Darstellung eines ersten Ausführungsbeispiels einer Lüfterantriebsvorrichtung 1 mit einem ersten Lüfterrad 2 und einem zweiten Lüfterrad 3.

Die Lüfterantriebsvorrichtung 1 weist ein erstes Gehäuseelement 4 sowie ein zweites nicht sichtbares Gehäuseelement auf. Ferner weist die Lüfterantriebsvorrichtung 1 zumindest ein erstes Lüfterrad 2 mit einer Anzahl von ersten Lüfterradflügeln 6 auf. Das erste Lüfterrad 2 ist am Lüfterradflanschblech 12 mit dem ersten Gehäuseelement 4 verbunden. In Strömungsrichtung SR ist das zweite Lüfterrad 3 vor dem ersten Gehäuseelement 4 angeordnet.

Das erste Gehäuseelement 4 weist im Wesentlichen eine deckelförmige Form mit einer im Wesentlichen runden Querschnittsfläche auf. Im dargestellten Ausführungsbeispiel ist das erste Gehäuseelement aus einem Metall wie beispielsweise aus Stahl oder Aluminium oder aus Edelstahl ausgebildet. In einem anderen Ausführungsbeispiel ist das erste Gehäuseelement 4 aus Keramik, aus Kunststoff oder aus einem Faserverbundwerkstoff ausgebildet. Das erste Gehäuseelement ist insbesondere durch Gießen wie beispielsweise Spritzgießen hergestellt und anschließend mittels eines abtragenden Fertigungsverfahrens wie beispielsweise Fräsen, Drehen usw. bearbeitet, um dem ersten Gehäuseelement 4 seine endgültige Kontur zu geben. Das erste Gehäuseelement 4 weist eine Anzahl von Kühlrippen 10 auf, die im Wesentlichen radial strahlenartig von dem Gehäusemittelpunkt nach außen laufen. In einem anderen Ausführungsbeispiel können die Kühlrippen 10 radial oder unter einem Winkel von 0 bis 90 Grad bezüglich der radialen Richtung angeordnet sein. Die Flächen der Kühlrippen 10 sind im Wesentlichen parallel zur Strömungsrichtung SR angeordnet. Das erste Gehäuseelement 4 ist mit einem nicht dargestellten zweiten Gehäuseelement 2, insbesondere formschlüssig, verbunden. In einem anderen Ausführungsbeispiel kann das erste Gehäuseelement 4 mit dem zweiten Gehäuseelement 5 einteilig ausgebildet sein. Das erste Gehäuseelement 4 ist über erste Befestigungselemente 13 insbesondere über Schrauben-Mutter-Verbindungen an dem Lüfterflanschblech 12 und/oder an dem zweiten Gehäuseelement 5 befestigt. Das Lüfterflanschblech ist beispielsweise aus Metall wie Aluminium oder Stahl ausgebildet und mit dem ersten Lüfterrad 2 verbunden. Beispielsweise kann das Lüfterflanschblech 12 beim Fertigungsprozess des ersten Lüfterrades 2, insbesondere beim Spritzgießen des ersten Lüfterrades, mit dem ersten Lüfterrad 2 verbunden werden.

Das erste Lüfterrad 2 weist eine Anzahl von ersten Lüfterradflügeln 6 auf. Im dargestellten Ausführungsbeispiel weist das erste Lüfterrad 2 11 erste Lüfterradflügel 6 auf. In einem anderen Ausführungsbeispiel weist das erste Lüfterrad 2 1 bis 11 oder mehr als 11 erste Lüfterradflügel 6 auf. Die ersten Lüfterradflügel 6 sind mit der Lüfterradnabe 14 verbunden. In einem anderen Ausführungsbeispiel sind die ersten Lüfterradflügel 6 einteilig mit der Lüfternabe 14 ausgebildet. Das erste Lüfterrad 2, insbesondere der zumindest eine erste Lüfterradflügel 6 und/oder die Lüfterradnabe 14, sind aus Kunststoff oder aus einem Metall mit geringer Dichte, insbesondere aus Aluminium, oder aus einem Faserverbundwerkstoff ausgebildet.

Im dargestellten Ausführungsbeispiel sind in einem nicht näher bezeichneten Bereich zumindest eines ersten Lüfterradflügels 6 zumindest ein zweites Strömungsleitelement 11 angeordnet. Im dargestellten Ausführungsbeispiel weisen alle ersten Lüfterradflügel 6 ein zweites Strömungsleitelement 11 auf. Die zweiten Strömungsleitelemente 11 verlaufen im Wesentlichen entlang eines nicht dargestellten Kreises, wobei die Strömungsrichtung SR durch dessen Mittelpunkt verläuft. Das erste Lüfterrad 2 mit den ersten Lüfterradflügeln 6 und in zweiten Strömungsleitelementen 11 wird beispielsweise mittels eines urformenden Fertigungsverfahrens, insbesondere mittels Spritzgießen gefertigt. Die zweiten Strömungsleitelemente 11 sind aus Kunststoff oder aus einem Metall mit geringer Dichte wie beispielsweise aus Aluminium oder aus einem Faserverbundwerkstoff ausgebildet. Im dargestellten Ausführungsbeispiel sind die zweiten Strömungsleitelemente 11 mit den ersten Lüfterradflügeln 6 einteilig ausgebildet. In einem anderen Ausführungsbeispiel sind die zweiten Strömungsleitelemente 11 mit den ersten Lüfterradflügeln 6 stoffschlüssig, beispielsweise durch Kleben, Löten, Schweißen usw., verbunden. Die ersten Lüfterradflügel 6 sind stromlinienförmig ausgebildet. Die Fläche eines ersten Lüfterradflügels 6 ist in sich verdreht und weist einen nicht näher bezeichneten Winkel zur Strömungsrichtung SR auf, der Werte zwischen 0 und 90 Grad, insbesondere zwischen 15 und 50 Grad aufweist. Die zweiten Strömungsleitelemente 11 sind zumindest abschnittsweise im Wesentlichen senkrecht zu dem jeweiligen ersten Lüfterradflügel 6 angeordnet. Das zumindest eine zweite Strömungsleitelement 11 ist derart ausgebildet, dass der jeweilige erste Lüfterradflügel 6 das zweite Strömungsleitelement in einen ersten nicht näher bezeichneten Abschnitt und einen zweiten nicht näher bezeichneten Abschnitt unterteilt. Der erste nicht näher bezeichnete Abschnitt des zweiten Strömungsleitelements 11 ist in Strömungsrichtung SR gesehen vor dem ersten Lüfterradflügel 6 angeordnet. Der zweite nicht näher bezeichnete Abschnitt des zumindest einen zweiten Strömungsleitelements 11 ist in Strömungsrichtung SR gesehen hinter dem ersten Lüfterradflügel 6 angeordnet.

Das zweite Lüfterrad 3 ist im Wesentlichen konzentrisch zu dem ersten Lüfterrad 2 und/oder im Wesentlichen konzentrisch zu dem ersten Gehäuseelement 4 und/oder dem zweiten Gehäuseelement 5 angeordnet. Das zweite Lüfterrad 3 weist eine Lüfterradnabe 9 auf. Von der Lüfterradnabe 9 aus verläuft zumindest ein zweiter Lüfterradflügel 7 in radiale Richtung nach außen. Die radiale Richtung ist dabei im Wesentlichen senkrecht zur Strömungsrichtung SR angeordnet. Die nicht näher bezeichneten Enden der zweiten Lüfterradflügel 7 werden im dargestellten Ausführungsbeispiel von einem Lüfterradmantel 8 des zweiten Lüfterrades aufgenommen. Im dargestellten Ausführungsbeispiel weist das zweite Lüfterrad 3 8 zweite Lüfterradflügel 7 auf. In einem anderen Ausführungsbeispiel weist das zweite Lüfterrad 2 1 bis 8 oder mehr als 8 zweite Lüfterradflügel 7 auf. Das zweite Lüfterrad 3 mit der Lüfterradnabe 9 und/oder den zweiten Lüfterradflügeln 7 und/oder dem Lüfterradmantel 8 des zweiten Lüfterrades sind aus Kunststoff oder aus einem Metall mit einer geringen Dichte wie beispielsweise aus Aluminium oder aus einem Faserverbundwerkstoff ausgebildet. Das zweite Lüfterrad 3 wird beispielsweise mittels eines urformenden Fertigungsverfahrens wie beispielsweise Spritzgießen hergestellt. In einem anderen Ausführungsbeispiel weist das zweite Lüfterrad 3 keinen Lüfterradmantel 8 auf. Die zweiten Lüfterradflügel 7 sind stromlinienförmig ausgebildet und können in sich verdreht sein. Die zweiten Lüfterradflügel 7 weisen einen nicht näher bezeichneten Winkel mit der Strömungsrichtung SR auf. Der nicht näher bezeichnete Winkel kann Werte zwischen 0 und 90 Grad, insbesondere zwischen 10 und 70 Grad, insbesondere zwischen 15 und 50 Grad annehmen.

Von dem ersten Lüfterrad 1 und/oder dem zweiten Lüfterrad 2 wird Luft angesaugt. Die Luft strömt im Wesentlichen in Richtung der Strömungsrichtung SR auf das erste Lüfterrad 2 und/oder das zweite Lüfterrad 3 zu. Die Luft, die von dem zweiten Lüfterrad 3 angesaugt wird, trifft auf das erste Gehäuseelement 4, strömt im Wesentlichen radial zwischen den nicht näher bezeichneten Zwischenräumen von benachbart angeordneten Kühlrippen 10 im Wesentlichen radial nach außen und trifft auf die zweiten Strömungsleitelemente 11. Die zweiten Strömungsleitelemente 11 leiten die Luft auf die Druckseite, insbesondere die Seite in Strömungsrichtung SR gesehen hinter dem ersten Lüfterrad ab. Auf diese Weise wird die von den ersten Lüfterradflügeln 6 erzeugte Luftströmung nicht von der radial in den nicht näher bezeichneten Zwischenräumen zwischen benachbarten Kühlrippen 10 gestört. Das zweite Lüfterrad weist einen Lüfterraddurchmesser DLR auf. Das erste Gehäuseelement weist einen Durchmesser DGE auf. Ein Quotient (Q) berechnet sich aus dem Lüfterraddurchmesser DLR des zweiten Lüfterrades dividiert durch den Durchmesser DGE des ersten Gehäuseelements. Der Quotient Q nimmt Werte zwischen 1/20 und 20, insbesondere Werte zwischen 1/10 und 10, an.

**Figur 3** zeigt eine Schnittdarstellung des ersten Ausführungsbeispiels der Lüfterantriebsvorrichtung 1. Gleiche Merkmale sind mit den gleichen Bezugszeichen versehen wie in den vorherigen Figuren.

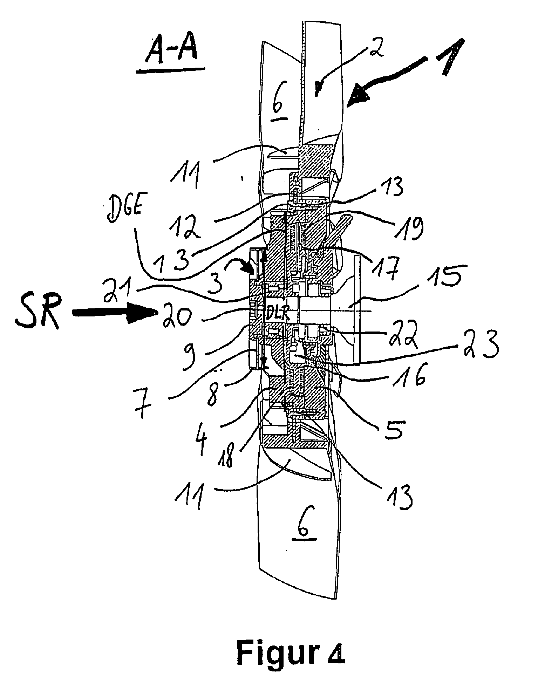

Zusätzlich zu Figur 2 ist in Figur 3 der Antriebswellenflansch 15 dargestellt. Die Antriebsflanschwelle 15 ist mit einer nicht dargestellten Motoreinheit, insbesondere mit der Kurbelwelle eines Verbrennungsmotors, verbunden, insbesondere drehfest verbunden. Das zweite Lüfterrad ist mittels eines zweiten Befestigungselements 20, insbesondere mittels einer Schraube, mit der Antriebsflanschwelle 15 verbunden. Auf diese Weise dreht sich das zweite Lüfterrad 3 mit derselben Drehzahl wie die Motoreinheit, insbesondere wie der Verbrennungsmotor, und mit der selben Drehzahl wie die in Figur 4 dargestellte Antriebsscheibe 16. Damit drehen sich die Antriebsflanschwelle 15, das zweite Lüfterrad 3 und die Antriebsscheibe 16 mit einer höheren Umfangsgeschwindigkeit als das erste Lüfterrad 2, das erste Gehäuseelement 4 und/oder das zweite Gehäuseelement 5. Damit wird die höhere Antriebsdrehzahl des zweiten Lüfterrades 3 gegenüber dem ersten Gehäuseelement 4 und/oder dem zweiten Gehäuseelement 5 genutzt, um einen effektiven Luftstrom zur Kühlung des Kupplungsgehäuses zu erzeugen. Im dargestellten Ausführungsbeispiel ist das zweite Lüfterrad als Ringlüfterrad ausgebildet. Die Lüfterantriebsvorrichtung 1 ist zumeist derart angeordnet, dass in Strömungsrichtung SR gesehen zumindest ein Kühler, insbesondere ein Kühlmittelkühler und/oder ein Ladeluftkühler und/oder ein Kondensator für eine Klimaanlage und/oder ein Ölkühler, insbesondere zur Getriebeölkühlung, und/oder ein Abgaskühler und/oder vor und eine Motoreinheit, insbesondere ein Verbrennungsmotor hinter der Lüfterantriebsvorrichtung angeordnet ist. In einem anderen Ausführungsbeispiel kann in Strömungsrichtung SR gesehen der zumindest eine Wärmetauscher hinter der Lüfterantriebsvorrichtung angeordnet sein.

Der Kühlluftstromverlauf KLV strömt entlang der Kühlrippen 10 an dem ersten Gehäuseelement 4 entlang und wird dann durch das Strömungsleitelement 11 zur Druckseite des ersten Lüfterrades 2 geleitet.

Das zweite Lüfterrad weist einen Lüfterraddurchmesser DLR auf. Das erste Gehäuseelement weist einen Durchmesser DGE auf. Ein Quotient (Q) berechnet sich aus dem Lüfterraddurchmesser DLR des zweiten Lüfterrades dividiert durch den Durchmesser DGE des ersten Gehäuseelements. Der Quotient Q nimmt Werte zwischen 1/20 und 20, insbesondere Werte zwischen 1/10 und 10, an.

**Figur 4** zeigt eine weitere Schnittdarstellung A-A eines ersten Ausführungsbeispiels einer Lüfterantriebsvorrichtung 1. Gleiche Merkmale sind mit den gleichen Bezugszeichen versehen wie in den vorherigen Figuren.

Im Unterschied zu Figur 3 zeigt Figur 4 auch einen Schnitt durch das erste Gehäuseelement 4 und das zweiten Gehäuseelement 5. Auf der Antriebsflanschwelle 15 ist in einem ersten nicht näher bezeichneten Wellenabschnitt ein erstes Lagerelement 21, insbesondere ein Wälzlager, beispielsweise ein zweireihiges Rollenlager und auf einem weiteren nicht näher bezeichneten Wellenabschnitt der Antriebsflanschwelle 15 ein zweites Lagerelement 22, insbesondere ein Wälzlager, insbesondere ein einreihiges Kegelrollenlager angeordnet. Das erste Lagerelement 21 und/oder das zweite Lagerelement 22 kann aber auch ein anderes Wälzlager wie beispielsweise ein Kugellager oder ein Zylinderrollenlager sein, wobei das Wälzlager einreihig oder mehrreihig ausgebildet sein kann. Benachbart zu dem zweiten Lagerelement 22 ist auf der Antriebsflanschwelle 15 ein Dichtelement zur Abdichtung des zweiten Lagerelements 22 angeordnet. Das nicht näher bezeichnete Dichtelement verhindert, dass beispielsweise Schmutz in das erste und/oder das zweite Lagerelement eintritt bzw. Schmieröl aus dem Lager nach außen austritt. Neben dem ersten nicht näher bezeichneten Dichtelement kann ein weiteres oder weitere Dichtelemente, insbesondere benachbart zu dem zweiten Lagerelement 22 angeordnet sein.

Das erste Gehäuseelement 4 und das zweite Gehäuseelement 5 sind formschlüssig, insbesondere durch zumindest ein erstes Befestigungselement 13, insbesondere durch eine Anzahl, eine Mehrzahl von ersten Befestigungselementen 13 miteinander verbunden. Das erste Gehäuseelement 4 und das zweite Gehäuseelement 5 umschließen einen Drehmomentübertragungsraum 23. In dem Drehmomentübertragungsraum 23 ist die Antriebsscheibe 16 angeordnet. Die Antriebsscheibe 16 ist drehfest mit der Antriebsflanschwelle 15 verbunden und/oder auf dieser angeordnet.

Die Antriebsscheibe 16 weist eine Anzahl von ersten labyrinthförmigen Aussparungen 17 auf. Das erste Gehäuseelement 4 und/oder das zweite Gehäuseelement 5 weisen zu den ersten labyrinthförmigen Aussparungen 17 korrespondierende zweite labyrinthförmige Aussparungen 18 und/oder dritte labyrinthförmige Aussparungen 19 auf. Die labyrinthförmigen Aussparungen 17, 18, 19 sind in die Antriebsscheibe 16 und/oder das erste Gehäuseelement 4 und/oder das zweite Gehäuseelement 5 mittels eines abtragenden Fertigungsverfahrens, wie beispielsweise Fräsen, Drehen, Erodieren usw., eingebracht. Die Antriebsscheibe 16 kämmt in den zweiten labyrinthförmigen Aussparungen 18 des ersten Gehäuseelements und/oder in den dritten labyrinthförmigen Aussparungen des zweiten Gehäuseelements 5. Zumindest abschnittsweise strömt viskoses Fluid, insbesondere Silikonöl oder ein anderes viskoses Fluid, zwischen den ersten labyrinthförmigen Aussparungen 17 und/oder den zweiten labyrinthförmigen Aussparungen 18 und/oder den dritten labyrinthförmigen Aussparungen 19, wodurch zumindest ein Drehmoment von der Antriebsscheibe 16 auf das erste Gehäuseelement 4 und/oder das zweite Gehäuseelement 5 übertragen wird. In der Antriebsscheibe 16 ist ein nicht näher bezeichneter Kanal, insbesondere eine Bohrung, angeordnet, in der das viskose Fluid, insbesondere Silikonöl zu den Bereichen der labyrinthförmigen Aussparungen 17, 18, 19 strömen kann. Ein nicht näher bezeichnetes Ventilelement steuert bzw. regelt den Zufluss und/oder den Abschluss von viskosem Fluid, insbesondere Silikonöl.

Das zweite Lüfterrad weist einen Lüfterraddurchmesser DLR auf. Das erste Gehäuseelement weist einen Durchmesser DGE auf. Ein Quotient (Q) berechnet sich aus dem Lüfterraddurchmesser DLR des zweiten Lüfterrades dividiert durch den Durchmesser DGE des ersten Gehäuseelements. Der Quotient Q nimmt Werte zwischen 1/20 und 20, insbesondere Werte zwischen 1/10 und 10, an.

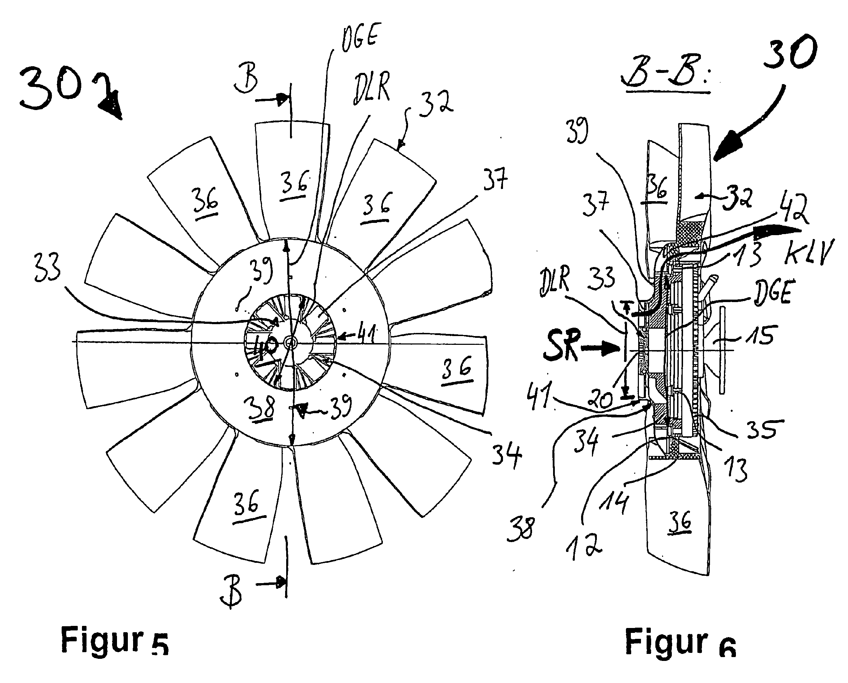

**Figur 5** zeigt eine Vorderansicht und **Figur 6** zeigt eine Schnittdarstellung B-B eines zweiten Ausführungsbeispiels einer Lüfterantriebsvorrichtung 30. Gleiche Merkmale sind mit den gleichen Bezugszeichen versehen wie in den vorherigen Figuren.

Die Lüfterantriebsvorrichtung 30 weist ein erstes Lüfterrad 32, das im Wesentlichen wie das erste Lüfterrad 2 ausgebildet ist auf. Ferner weist die Lüfterantriebsvorrichtung 30 ein zweites Lüfterrad 33 auf.

Das erste Lüfterrad 32 ist im Wesentlichen wie das erste Lüfterrad 2 ausgebildet, außer dass keine zweiten Strömungsleitelemente 11 vorgesehen sind. Das zweite Lüfterrad 33 ist im Wesentlichen wie das zweite Lüfterrad 3 ausgebildet, weist jedoch keinen Lüfterradmantel 8 auf. Das erste Lüfterrad 32 weist eine Mehrzahl von ersten Lüfterradflügeln 36 auf, die im Wesentlichen wie die ersten Lüfterradflügel 6 ausgebildet sind, außer dass die ersten Lüfterradflügel 36 keine zweiten Strömungsleitelemente 11 aufweisen. Ferner weist das zweite Lüfterrad 33 zweite Lüfterradflügel 37 auf, die im Wesentlichen wie die zweiten Lüfterradflügel 7 ausgebildet sind. Die Lüfterantriebsvorrichtung 30 weist ein erstes Gehäuseelement 34 und/oder ein zweites Gehäuseelement 35 auf. Das erste Gehäuseelement 34 entspricht im Wesentlichen dem ersten Gehäuseelement 4. Das zweite Gehäuseelement 35 entspricht im Wesentlichen dem zweiten Gehäuseelement 5.

An dem ersten Gehäuseelement 34 ist ein erstes Strömungsleitelement 38 angeordnet. Das erste Strömungsleitelement 38 ist im Wesentlichen haubenförmig ausgebildet. Die Haube weist eine erste Haubenöffnung 40 und eine zweite Haubenöffnung 42 auf. Das haubenförmige erste Strömungsleitelement 38 ist derart ausgebildet, dass die Haube in einen Haubenringabschnitt übergeht. Im Bereich des Haubenringabschnitts 41 weist das erste Strömungsleitelement 38 eine erste Haubenöffnung 40 auf. Die erste Haubenöffnung 40 weist im Wesentlichen eine kreisförmige Querschnittsfläche auf. Im Wesentlichen parallel zu der ersten Haubenöffnung 40 weist das erste Strömungsleitelement 38 eine zweite Haubenöffnung 42 auf. Die zweite Haubenöffnung weist im Wesentlichen eine kreisförmige Querschnittsfläche auf. Die Querschnittsfläche der zweiten Haubenöffnung 42 weist einen größeren Durchmesser auf als die Querschnittsfläche der ersten Haubenöffnung 40. In dem Haubenringabschnitt 41 ist das zweite Lüfterrad 33 angeordnet. Nach dem Haubenringabschnitt 41 vergrößert sich der Durchmesser der Querschnittsfläche der Haube im Wesentlichen bis auf den Durchmesser der Querschnittsfläche der zweiten Haubenöffnung 42, die im Wesentlichen dem Durchmesser der Lüfternabe 14 entspricht. Das erste Strömungsleitelement 38 ist aus Kunststoff ausgebildet. In einem anderen Ausführungsbeispiel ist das erste Strömungsleitelement 38 aus einem Metall mit geringer Dichte, insbesondere aus Aluminium, beispielsweise aus einem Aluminiumblech, oder aus einem Faserverbundwerkstoff ausgebildet. Im dargestellten Ausführungsbeispiel ist das haubenartig ausgebildete erste Strömungsleitelement 38 mit der Lüfternabe 14, insbesondere stoffschlüssig durch Löten, Schweißen, Kleben usw. und/oder formschlüssig, beispielsweise durch Verschrauben oder Verkrimpen bzw. Verclipsen ausgebildet. Insbesondere ist das haubenförmige erste Strömungsleitelement 38 formschlüssig, insbesondere über eine Clipverbindung mit zumindest einem Befestigungsclip 39 mit dem ersten Gehäuseelement 34 verbunden. Dazu weist das erste Strömungsleitelement 38 eine nicht näher bezeichnete Öffnung auf, in die der Befestigungsclip 39 des ersten Gehäuseelements 34 einrasten kann. Im dargestellten Ausführungsbeispiel weist das erste Strömungsleitelement 38 6 Öffnungen auf, in die 6 Befestigungsclipse 39 des ersten Gehäuseelements 34 einrasten. In einem anderen Ausführungsbeispiel weist das erste Strömungsleitelement 38 1 bis 6 oder mehr als 6 Öffnungen und Befestigungsclip 39 auf, die in die Öffnungen einschnappen bzw. einrasten und das erste Strömungsleitelement 38 auf diese Weise mit dem ersten Gehäuseelement 34 verbinden. Das zweite Lüfterrad 33 ist als Axiallüfterrad ausgebildet. Der Kühlluftstrom KLV strömt durch zumindest einen nicht dargestellten Durchbruch im Lüfterflanschblech 12. Vorteilhaft ist, dass die aus den Kühlrippen 10 nicht radial zum größeren Durchmesser des ersten Lüfterrades 32 abströmen, wodurch der Wirkungsgrad des ersten Lüfterrades 32 verbessert wird.

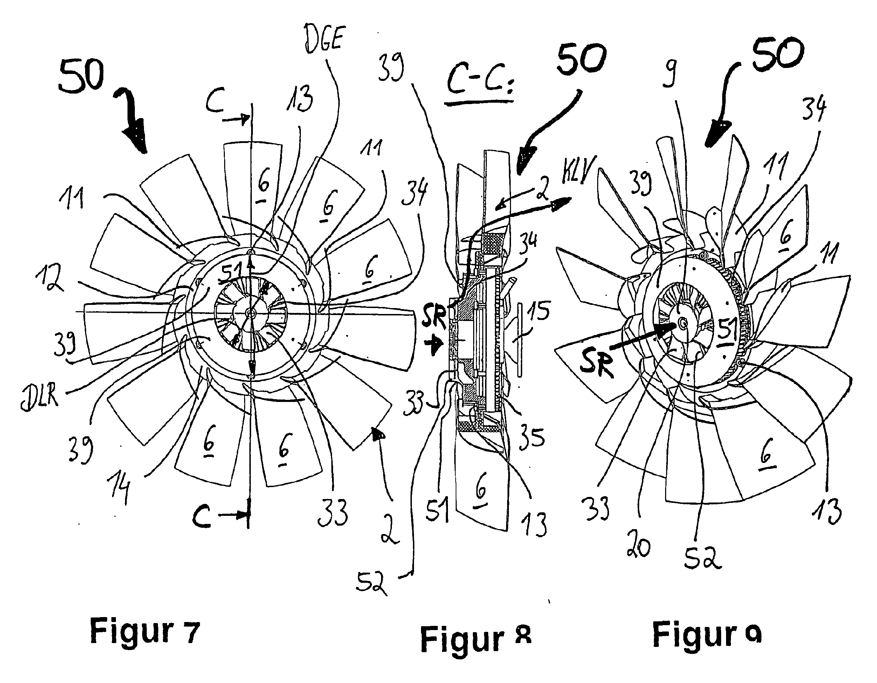

**Figur 7** zeigt eine Vorderansicht, **Figur 8** zeigt eine Schnittdarstellung C-C und **Figur 9** zeigt eine isometrische Darstellung eines dritten Ausführungsbeispiels einer Lüfterantriebsvorrichtung 50. Gleiche Merkmale sind mit den gleichen Bezugszeichen versehen wie in den vorherigen Figuren.

Im Unterschied zu den Figuren 5 und 6 ist das dritte haubenartige Strömungsleitelement 51 derart ausgebildet, dass das haubenartige Strömungsleitelement 51 nicht bis zur Lüfternabe 14 gezogen wird, sondern nur bis zum ersten Gehäuseelement 34 gezogen wird. Das erste Gehäuseelement weist ebenfalls Befestigungsclipse 39 auf, die in nicht näher bezeichnete Öffnungen des Strömungsleitelements einschnappen bzw. einrasten und das Strömungsleitelement 51 auf diese Weise mit dem ersten Gehäuseelement 34 verbinden, insbesondere formschlüssig verbinden. Das haubenartige Strömungsleitelement 51 weist eine erste Haubenelementöffnung 52 auf, die im Wesentlichen der ersten Haubenöffnung 40 entspricht. Der Kühlluftströmungsverlauf KLV ist dementsprechend so, dass die aus den Kühlrippen 10 auf die Saugseite des ersten Lüfterrades 32 abgeleitet wird. Vorteilhaft hier ist der geringe Gegendruck für die abströmende Kühlluft, da die Kühlluft mit der Ansaugluft des ersten Lüfterrades vermischt wird. Durch die zweiten Strömungsleitelemente 11 werden die nachteiligen Effekte bezüglich der radialen Ablenkung der Ansaugluft vermieden. Die zweiten Strömungsleitelemente 11 leiten die Kühlluft aus den Kühlrippen 10 gezielt auf die Druckseite des ersten Lüfterrades 2, ohne die anströmende Luft aus dem nicht dargestellten Kühler radial nach außen abzulenken.

Das zweite Lüfterrad weist einen Lüfterraddurchmesser DLR auf. Das erste Gehäuseelement weist einen Durchmesser DGE auf. Ein Quotient (Q) berechnet sich aus dem Lüfterraddurchmesser DLR des zweiten Lüfterrades dividiert durch den Durchmesser DGE des ersten Gehäuseelements. Der Quotient Q nimmt Werte zwischen 1/20 und 20, insbesondere Werte zwischen 1/10 und 10, an.

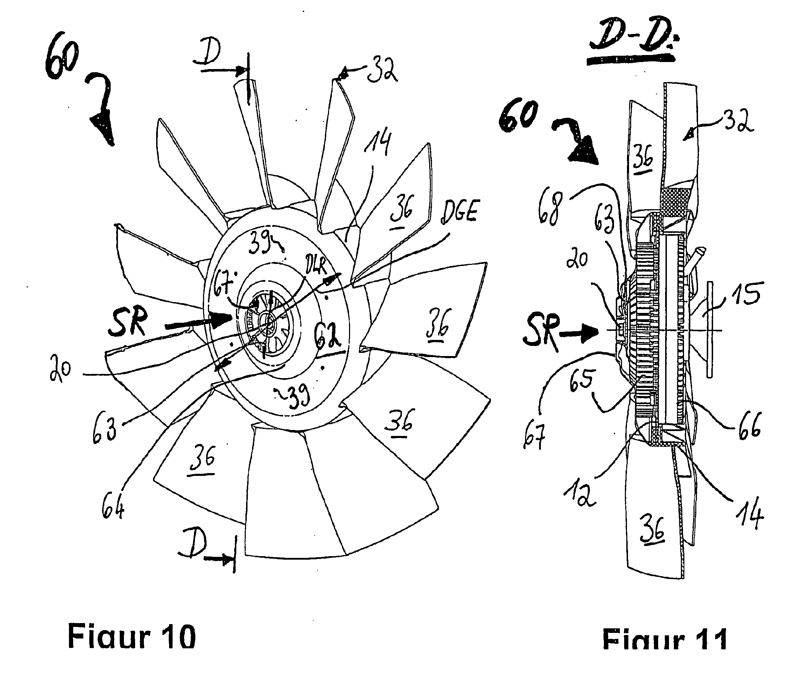

**Figur 10** zeigt eine isometrische Darstellung und **Figur 11** zeigt eine Schnittdarstellung D-D eines vierten Ausführungsbeispiels einer Lüfterantriebsvorrichtung 60. gleiche Merkmale sind mit den gleichen Bezugszeichen versehen wie in den vorherigen Figuren.

Die Lüfterantriebsvorrichtung 60 weist ein erstes Lüfterrad 32 sowie ein zweites Lüfterrad 63 auf. Das erste Lüfterrad 32 weist eine Anzahl von ersten Lüfterradflügeln 36 auf. Die Lüfterantriebsvorrichtung 60 weist ein viertes Strömungsleitelement 62 auf, das haubenartig ausgebildet ist und ein Kegelabschnittselement 64 aufweist. In das Kegelabschnittselement 64 ist eine erste Haubenöffnung 67 eingebracht. Ferner weist die Lüfterantriebsvorrichtung 60 ein zweites Lüfterrad 63 auf. Das zweite Lüfterrad 63 weist eine Anzahl, insbesondere eine Mehrzahl von Lüfterradflügeln 68 auf, deren nicht näher bezeichnete Enden im Wesentlichen an die Kegelform des Kegelabschnittselements 64 des vierten Strömungsleitelements 62 angepasst sind. Durch die Haubenöffnung 67 tritt Luft in Richtung der Strömungsrichtung SR in das haubenartig ausgebildete vierte Strömungsleitelement 62 ein, strömt an den nicht näher bezeichneten Rippen des ersten Gehäuseelements 65 vorbei. Das erste Gehäuseelement 65 weist einen nicht näher bezeichneten Kegelabschnitt auf. Im Wesentlichen ist das erste Gehäuseelement 65 wie das erste Gehäuseelement 4 ausgebildet. Das zweite Gehäuseelement 66 entspricht im Wesentlichen dem zweiten Gehäuseelement 5. Wie auch das erste Strömungsleitelement 38 ist auch das vierte Strömungsleitelement 62 bis zur Lüfternabe 14 gezogen und mit dieser Verbunden. Ferner weist das vierte Strömungsleitelement 62 nicht näher bezeichnete Öffnungen auf, in die Befestigungsclipse 39 des ersten Gehäuseelements 65 einrasten und auf diese Weise das vierte Strömungsleitelement 62 formschlüssig mit dem ersten Gehäuseelement 65 verbinden.

Das zweite Lüfterrad 63 ist als Radiallüfterrad ausgebildet. Das Radiallüfterrad ist bauartbedingt geeignet, höhere Gegendrücke zu überwinden und eignet sich bevorzugt für eine Ableitung der Kühlluft auf die Druckseite des ersten Lüfterrads 32.

Das zweite Lüfterrad weist einen Lüfterraddurchmesser DLR auf. Das erste Gehäuseelement weist einen Durchmesser DGE auf. Ein Quotient (Q) berechnet sich aus dem Lüfterraddurchmesser DLR des zweiten Lüfterrades dividiert durch den Durchmesser DGE des ersten Gehäuseelements. Der Quotient Q nimmt Werte zwischen 1/20 und 20, insbesondere Werte zwischen 1/10 und 10, an.

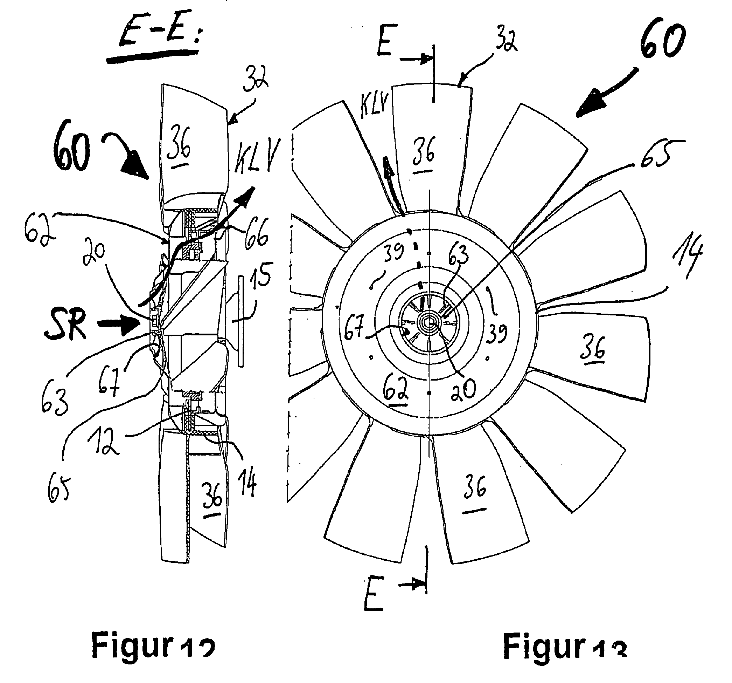

**Figur 12** zeigt eine Schnittdarstellung E-E eines vierten Ausführungsbeispiels und **Figur 13** zeigt eine Vorderansicht eines vierten Ausführungsbeispiels einer Lüfterantriebsvorrichtung 60. In den Figuren 12 und 13 ist der Strömungsverlauf der Kühlluft KLV dargestellt, wobei erkennbar ist, dass sowohl die Kühlrippen des ersten Gehäuseelements 65 als auch die Kühlrippen des zweiten Gehäuseelements 66 mit Kühlluft überstrichen werden.

Das zweite Lüfterrad weist einen Lüfterraddurchmesser DLR auf. Das erste Gehäuseelement weist einen Durchmesser DGE auf. Ein Quotient (Q) berechnet sich aus dem Lüfterraddurchmesser DLR des zweiten Lüfterrades dividiert durch den Durchmesser DGE des ersten Gehäuseelements. Der Quotient Q nimmt Werte zwischen 1/20 und 20, insbesondere Werte zwischen 1/10 und 10, an.

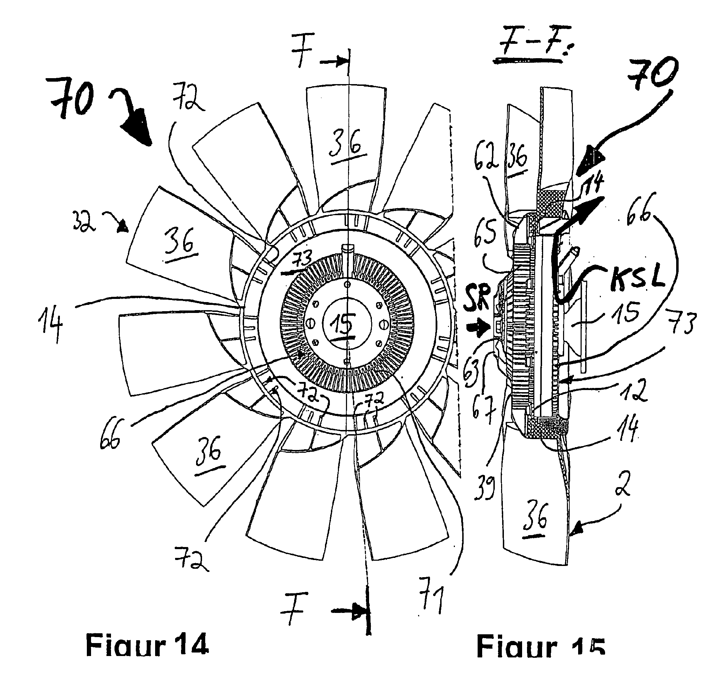

**Figur 14** zeigt eine Rückansicht eines fünften Ausführungsbeispiels und **Figur 15** zeigt eine Schnittdarstellung F-F eines fünften Ausführungsbeispiels einer Lüfterantriebsvorrichtung 70. Gleiche Merkmale sind mit den gleichen Bezugszeichen versehen wie in den vorherigen Figuren. Im Unterschied zu den Figuren 10, 11, 12 und 13 für die Lüfterantriebsvorrichtung 60 ist bei der Lüfterantriebsvorrichtung 70 in dem Bereich, in dem die ersten Lüfterradflügel 36 des ersten Lüfterrads 32 mit der Lüfterantriebsnabe 14 verbunden sind. Lüfterströmungsbeeinflussungsrippen 72 aus der Lüfternabe 14 ausgebildet. Die Luftströmungsbeeinflussungsrippen 72 zeigen radial zur nicht dargestellten Lüfterradachse des ersten Lüfterrades 32 und/oder des zweiten Lüfterrades 63. Im dargestellten Ausführungsbeispiel sind pro Lüfterradflügel 36 des ersten Lüfterrades 32 jeweils 3 Luftströmungsbeeinflussungsrippen 72 ausgebildet. In einem anderen Ausführungsbeispiel können pro Lüfterradflügel 36 des ersten Lüfterrades 32 1 bis 3 oder mehr als 3 Luftströmungsbeeinflussungsrippen 72 vorgesehen sein. Die Luftströmungsbeeinflussungsrippen 72 sind im dargestellten Ausführungsbeispiel einteilig mit dem jeweiligen Lüfterradflügel 36 ausgebildet und/oder einteilig mit der Lüfternabe 14 ausgebildet. In einem anderen Ausführungsbeispiel sind die Luftströmungsbeeinflussungsrippen 72 mit den ersten Lüfterradflügeln 36 und/oder mit der Lüfternabe 14 verbunden, insbesondere stoffschlüssig beispielsweise durch Kleben, Schweißen, Löten usw. oder formschlüssig beispielsweise durch Verkrimpen oder Einrasten mittels Rastelementen verbunden.

Benachbart zu dem zweiten Gehäuseelement 66 ist ein Abdeckelement 73, insbesondere ein Abdeckelement aus Blech, insbesondere aus einem Metall mit geringer Dichte oder aus Kunststoff oder aus einem Faserverbundwerkstoff angebracht. Das Abdeckelement 73 ist im Wesentlichen ringtellerförmig ausgebildet.

Aufgrund des Abdeckelements 73 und der Luftströmungsbeeinflussungsrippen 72 wird die Durchströmung des zweiten Gehäuseelements 66 verbessert. Die Strömungsbeeinflussungsrippen 72 versetzen die Luft in den Bereich, in dem sie angebracht sind, in Rotation. Infolge der Fliehkraft beim Drehen des ersten Lüfterrades 32 wird diese Luft radial nach außen zu größeren Durchmessern des ersten Lüfterrades 32 und/oder des zweiten Gehäuseelements 66 abgelenkt und es entsteht aufgrund der abgedrängten Luft eine Zone geringeren statischen Drucks, also ein Sog, der bewirkt, dass Luft gezielt durch die Kühlrippen 71 des zweiten Gehäuseelements 66 zu saugen. Das Abdeckelement 73 verstärkt diesen Sogeffekt, da es einen kanalisierten Strömungsverlauf KSL erlaubt, d. h. die Luft wird im inneren Durchmesserbereich des zweiten Gehäuseelements 66 angesaugt. Auf diese Weise wird ein Wiederansaugen der abgeleiteten erwärmten Kühlluft vermieden.

Das zweite Lüfterrad weist einen Lüfterraddurchmesser DLR auf. Das erste Gehäuseelement weist einen Durchmesser DGE auf. Ein Quotient (Q) berechnet sich aus dem Lüfterraddurchmesser DLR des zweiten Lüfterrades dividiert durch den Durchmesser DGE des ersten Gehäuseelements. Der Quotient Q nimmt Werte zwischen 1/20 und 20, insbesondere Werte zwischen 1/10 und 10, an.

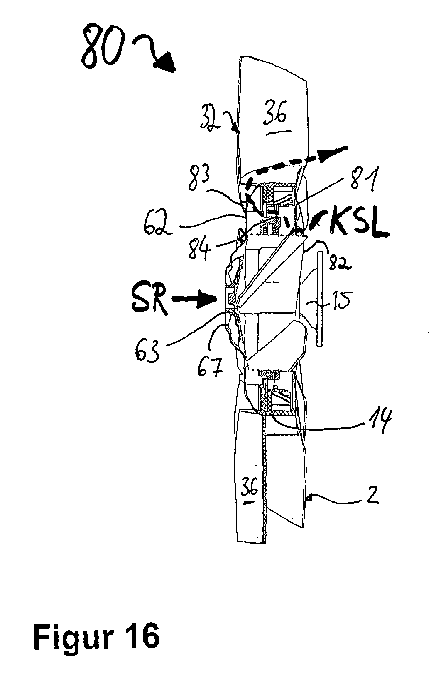

**Figur 16** zeigt ein sechstes Ausführungsbeispiel einer Lüfterantriebsvorrichtung. Gleiche Merkmale sind mit den gleichen Bezugszeichen versehen wie in den vorherigen Figuren. Die Lüfterantriebsvorrichtung 80 weist eine Abdeckplatte 81 auf. Die Abdeckplatte 81 verhindert ein Abströmen der Kühlluft auf der Kupplungsrückseite 82. Zumindest eine Öffnung, insbesondere Öffnungen, 84 die im Wesentlich axial , insbesondere parallel, bezüglich der Richtung SR ausgebildet sind, bewirken dass der Luftstrom KSL von der Kupplungsrückseite 82 auf die Kupplungsvorderseite strömt. Vorteilhaft bei dieser Ausgestaltung ist die Unterstützung des Kühlluftstroms durch den statischen Förderdruck des Lüfters 32. Das Gehäuse des Lüfters weist Kühlrippen auf, so dass ein möglichst großer Teil der erzeugten Wärme an die Kühlluft übertragen und abgeführt wird. Die Rippenoberfläche ist groß, so dass der Kühlluftstrom einen langen Strömungsweg entlang der Kühlrippen zurücklegt. Die Rippenoberfläche ist ferner derart gestaltet, dass eine Turbulenzerzeugung erfolgt.

Die Merkmale der verschiedenen Ausführungsbeispiele sind beliebig miteinander kombinierbar, Falls dieses von den vorliegenden Ansprüchen vorgesehen wird. Die Erfindung ist auch für andere als die gezeigten Gebiete einsetzbar.

## Patentansprüche

1. Lüfterantriebsvorrichtung zum Antrieb zumindest eines ersten Lüfterrades (2, 32)
aufweisend
zumindest eine antreibbare Antriebsscheibe (16),
zumindest ein erstes kühlbares Gehäuseelement (4, 34, 65) zum Antrieb des ersten Lüfterrades (2, 32), wobei das zumindest eine erste Gehäuseelement (4, 34, 65) mit der zumindest einen Antriebsscheibe (16) fluidreibend drehmomentübertragbar verbindbar ist, wobei zumindest ein Drehmomentübertragungsraum (23) mit zumindest einem Fluid beströmbar ist,
**dadurch gekennzeichnet, dass**
zumindest eine Temperierungsvorrichtung (3, 33, 63) zur Kühlung des zumindest einen ersten Gehäuseelements (4, 34, 65) vorgesehen ist, wobei
die Temperierungsvorrichtung als zumindest ein zweites Lüfterrad (3, 33, 63) ausgebildet ist.

2. Lüfterantriebsvorrichtung nach Anspruch 1, **dadurch gekennzeichnet, dass** die Temperierungsvorrichtung (3, 33, 63) benachbart zu dem ersten Gehäuseelement (4, 34, 65) angeordnet ist.

3. Lüfterantriebsvorrichtung nach einem der vorhergehenden Ansprüche, **dadurch gekennzeichnet, dass** die Temperierungsvorrichtung (3, 33, 63) in Strömungsrichtung (SR) vor oder nach dem zumindest einen ersten Gehäuseelement (4, 34, 65) angeordnet ist.

4. Lüfterantriebsvorrichtung nach einem der vorhergehenden Ansprüche, **dadurch gekennzeichnet, dass** die Temperierungsvorrichtung (3, 33, 63) im Wesentlichen konzentrisch zu dem zumindest einen ersten Gehäuseelement (4, 34, 65) angeordnet ist.

5. Lüfterantriebsvorrichtung nach einem der vorhergehenden Ansprüche, **dadurch gekennzeichnet, dass** die Temperierungsvorrichtung (3, 33, 63) ringlüfterradartig ausgebildet ist.

6. Lüfterantriebsvorrichtung nach einem der vorhergehenden Ansprüche, **dadurch gekennzeichnet, dass** die Temperierungsvorrichtung (3, 33, 63) axiallüfterradartig ausgebildet ist.

7. Lüfterantriebsvorrichtung nach einem der Ansprüche 1 bis 5, **dadurch gekennzeichnet, dass** die Temperierungsvorrichtung (3, 33, 63) radiallüfterradartig ausgebildet ist.

8. Lüfterantriebsvorrichtung nach einem der vorhergehenden Ansprüche, **dadurch gekennzeichnet, dass** die Temperierungsvorrichtung (3, 33, 63) mit einer Antriebswelle (15) einer Motoreinheit fest, Insbesondere drehfest, verbunden ist.

9. Lüfterantriebsvorrichtung nach einem der vorhergehenden Ansprüche, **dadurch gekennzeichnet, dass** ein Quotient (Q), der sich aus einem Lüfterraddurchmesser (DLR) des zweiten Lüfterrades (3, 33, 63) dividiert durch einen Durchmesser (DGE) des ersten Gehäuseelements (4, 34, 65) berechnet, Werte zwischen 1/20 und 20, insbeSondere Werte zwischen 1/10 und 10, annimmt.

10. Lüfterantriebsvorrichtung nach einem der vorhergehenden Ansprüche, **dadurch gekennzeichnet, dass** der Drehmomentübertragungsraum (23) mit einem viskosen Fluid durch zumindest eine Bohrung beströmbar ist.

11. Lüfterantriebsvorrichtung nach einem der vorhergehenden Ansprüche, **dadurch gekennzeichnet, dass** das zumindest eine erste Gehäuseelement (4, 34, 65) und/oder das zumindest eine zweite Gehäuseelement (5, 35, 66) erste konzentrische labyrinthförmige Aussparungen (18, 19) aufweisen und die Antriebsscheibe (16) zweite dazu korrespondierende konzentrische labyrinthförmige Aussparungen (17) aufweist.

12. Lüfterantriebsvorrichtung nach einem der vorhergehenden Ansprüche, **dadurch gekennzeichnet, dass** das zumindest eine erste Gehäuseelement (4, 34, 65) und/oder das zumindest eine zweite Gehäuseelement (5, 35, 66) fest, insbesondere drehfest, mit dem zumindest einen ersten Lüfterrad (2, 32) verbunden sind.

13. Lüfterantriebsvorrichtung nach einem der vorhergehenden Ansprüche, **dadurch gekennzeichnet, dass** das zumindest eine erste Gehäuseelement (4, 34, 65) und/oder das zumindest eine zweite Gehäuseelement (5, 35, 66) Kühlrippen (10, 71) aufweisen.

14. Lüfter mit einer Lüfterantriebsvorrichtung nach einem der Ansprüche 1 bis 13 für zumindest einen Wärmetauscher für ein Kraftfahrzeug.

## Claims

1. A fan drive device for deriving at least one first fan wheel (2, 32)
having
at least one drivable drive disk (16),
at least one first coolable housing element (4, 34, 65) for driving the first fan wheel (2, 32), wherein the at least one first housing element (4, 34, 65) can be connected to the at least one drive disk (16) in such a manner that torque can be transmitted by means of fluid friction, wherein at least one torque transmission space (23) can be filled with at least one fluid,
**characterized in that**
at least one temperature control device (3, 33, 63) for cooling the at least one first housing element (4, 34, 65) is provides, wherein
the temperature control device is embodied as at least one second fan wheel (3, 33, 63).

2. The fan drive device according to claim 1, **characterized in that** the temperature control device (3, 33, 63) is disposed adjacent to the first housing element 4, 34, 65).

3. The fan drive device according to any one of the preceding claims, **characterized in that** the temperature control device (3, 33, 63) is disposed upstream or downstream of the at least one first housing element (4, 34, 65) in the direction of flow (SR).

4. The fan drive device according to any one of the preceding claims, **characterized in that** the temperature control device (3, 33, 63) is disposed substantially concentrically to the at least one first housing element (4, 34, 65).

5. The fan drive device according to any one of the preceding claims, **characterized in that** the temperature control device (3, 33, 63) is embodied as an angular fan wheel.

6. The fan drive device according to many one of the preceding claims, **characterized in that** the temperature control device (3, 33, 63) is embodied as an axial fan wheel.

7. The fan drive device according to many one of claims 1 to 5, **characterized in that** the temperature control device (3, 33, 63) is embodied as a radial fan wheel.

8. The fan drive device according to many one of the preceding claims, **characterized in that** the temperature control device (3, 33, 63) is connected securely, particularity non-rotatably, to a drive shaft (15) of a motor unit.

9. The fan drive device according to many one of the preceding claims, **characterized in that** a quotient (Q), calculated by dividing the fan wheel diameter (DLR) of the second fan wheel (3, 33, 63) by the diameter (DGE) of the first housing element (4, 34, 65), has value of between 1/20 and 20, more particularly, values of between 1/10 and 10.

10. The fan drive device according to any one of the preceding claims, **characterized in that** the torque transmission space (23) can be filled with a viscous fluid via at least one bore hole.

11. The fan drive device according to any one of the preceding claims, **characterized in that** the at least one first housing element (4, 34, 65) and/or the at least one second housing element (5, 35, 66) have first concentric labyrinthine openings (18, 19), and the drive disk (16) has second concentric labyrinthine opening (17) that correspond to the first openings.

12. The fan drive device according to any one of the preceding claims, **characterized in that** the at least one first housing element (4, 34, 65) and/or the at least one second housing element (5, 35, 66) are securely, particularly non-rotatably, connected to the at least one first fan wheel (2, 32).

13. The fan drive device according to any one of the preceding claims, **characterized in that** the at least one first housing element (4, 34, 65) and/or the at least once second housing element (5, 35, 66) have cooling fins (10, 71).

14. A fan having a fan drive device according to many one of claims 1 to 13 for at least one heat exchanger for a motor vehicle.

## Revendications

1. Dispositif d'entraînement de ventilateur servant à l'entraînement d'au moins une première roue de ventilateur (2, 32), présentant :
- au moins une poulie de commande (16) actionnable,
- au moins un premier élément de carter (4, 34, 65) refroidissable, servant à l'entraînement de la première roue de ventilateur (2, 32), où le premier élément de carter (4, 34, 65) au moins au nombre de un peut être couplé à la poulie de commande (16) au moins au nombre de un, de façon à pouvoir transmettre un couple, par frottement fluidique, où au moins un espace de transmission de couple (23) peut être traversé par au moins un fluide,
**caractérisé en ce qu'**il est prévu au moins un dispositif d'équilibrage de température (3, 33, 63) servant au refroidissement du premier élément de carter (4, 34, 65) au moins au nombre de un, où le dispositif d'équilibrage de température est configuré comme au moins une deuxième roue de ventilateur (3, 33, 63).

2. Dispositif d'entraînement de ventilateur selon la revendication 1, **caractérisé en ce que** le dispositif d'équilibrage de température (3, 33, 63) est disposé en étant voisin du premier élément de carter (4, 34, 65).

3. Dispositif d'entraînement de ventilateur selon l'une ou l'autre des revendications précédentes, **caractérisé en ce que** le dispositif d'équilibrage de température (3, 33, 63) est disposé, dans la direction d'écoulement (SR), en amont ou en aval du premier élément de carter (4, 34, 65) au moins au nombre de un.

4. Dispositif d'entraînement de ventilateur selon l'une quelconque des revendications précédentes, **caractérisé en ce que** le dispositif d'équilibrage de température (3, 33, 63) est disposé pratiquement de façon concentrique par rapport au premier élément de carter (4, 34, 65) au moins au nombre de un.

5. Dispositif d'entraînement de ventilateur selon l'une quelconque des revendications précédentes, **caractérisé en ce que** le dispositif d'équilibrage de température (3, 33, 63) est configuré à la façon d'une roue de ventilateur circulaire.

6. Dispositif d'entraînement de ventilateur selon l'une quelconque des revendications précédentes, **caractérisé en ce que** le dispositif d'équilibrage de température (3, 33, 63) est configuré à la façon d'une roue de ventilateur axial.

7. Dispositif d'entraînement de ventilateur selon l'une quelconque des revendications 1 à 5, **caractérisé en ce que** le dispositif d'équilibrage de température (3, 33, 63) est configuré à la façon d'une roue de ventilateur radial.

8. Dispositif d'entraînement de ventilateur selon l'une quelconque des revendications précédente, **caractérisé en ce que** le dispositif d'équilibrage de température (3, 33, 63) est solidaire, en particulier solidaire en rotation d'un arbre d'entraînement (15) d'un bloc-moteur.

9. Dispositif d'entraînement de ventilateur selon l'une quelconque des revendications précédente, **caractérisé en ce qu'**un quotient (Q), qui se calcule à partir d'un diamètre de roue de ventilateur (DLR) de la deuxième roue de ventilateur (3, 33, 63), divisé par un diamètre (DGE) du premier élément de carter (4, 34, 65), prend des valeurs comprises entre 1/20 et 20, en particulier des valeurs comprises entre 1/10 et 10.

10. Dispositif d'entraînement de ventilateur selon l'une quelconque des revendications précédentes, **caractérisé en ce que** l'espace de transmission de couple (23) peut être traversé par un fluide visqueux passant par au moins un perçage.

11. Dispositif d'entraînement de ventilateur selon l'une quelconque des revendications précédentes, **caractérisé en ce que** le premier élément de carter (4, 34, 65) au moins au nombre de un et / ou le deuxième élément de carter (5, 35, 66) au moins au nombre de un présentent des premiers évidements (18, 19) concentriques, en forme de labyrinthe, et la poulie de commande (16) présente des deuxièmes évidements (17) concentriques, en forme de labyrinthe, leur correspondant.

12. Dispositif d'entraînement de ventilateur selon l'une quelconque des revendications précédentes, **caractérisé en ce que** le premier élément de carter (4, 34, 65) au moins au nombre de un et / ou le deuxième élément de carter (5, 35, 66) au moins au nombre de un sont solidaires, en particulier solidaires en rotation de la première roue de ventilateur (2, 32) au moins au nombre de un.

13. Dispositif d'entraînement de ventilateur selon l'une quelconque des revendications précédentes, **caractérisé en ce que** le premier élément de carter (4, 34, 65) au moins au nombre de un et / ou le deuxième élément de carter (5, 35, 66) au moins au nombre de un présentent des ailettes de refroidissement (10, 71).

14. Ventilateur comprenant un dispositif d'entraînement de ventilateur selon l'une quelconque des revendications 1 à 13, pour au moins un échangeur de chaleur pour un véhicule automobile.
